# EUROPEAN PATENT APPLICATION

(11) **EP 3 477 911 A1**
(43) Date of publication of application: **01.05.2019**
(21) Application number: 17198784.5
(22) Date of filing: 27.10.2017
(51) Int. Cl.: H04L 29/08, H04W 4/00, H04W 4/24, H04W 28/06, H04L 29/06

(54) **NETWORK ENTITY FOR FORWARDING USER PAYLOAD DATA FROM A USER ENTITY TO A NETWORK SERVER, SYSTEM, METHOD AND COMPUTER PROGRAM PRODUCT**

(71) Applicant: Deutsche Telekom AG, 53113 Bonn (DE)
(72) Inventor: SCHULZ, Mario, 04643 Geithain (DE)
(74) Representative: Patentship Patentanwaltsgesellschaft mbH

(57) **Abstract**

One embodiment describes a network entity 101 for forwarding user payload data from a user entity 104 to a network server 103. The network entity 101 comprises a network interface 102 configured to receive the user payload data from the user entity 104. The network entity further comprises a processor 111. The processor 111 is configured to provide a data packet, the data packet comprising a signalling message 110 according to a first network protocol that provides signalling for authentication, authorization and/or accounting management. The signalling message further comprises an attribute field. The processor 111 is further configured to include the received payload data into the attribute filed to obtain a processed data packet. The network interface 102 is further configured to transmit the processed data packet to the network server 103.

## Description

The present disclosure relates to a network entity for forwarding payload data from a user entity to a network server over a communication network.

User equipment used for Internet of Things (IoT), especially narrow-band Internet of Things (NB-IoT), processes payload data that comprises a small data size. For example a level sensor transmits a few bits every day or every week to an application server to transmit the level of a garbage bin.

Usually, payload data is included into a data packet comprising a protocol header, for example an UDP/IP header. These headers are in common networks necessary to allocate the application data to a receiver.

It is object of the invention to present an improved concept for forwarding user payload data from a user entity to a network server.

This object is achieved by the features of the independent claims. Further embodiments are described in the dependent claims, the description as well as in the figures.

The invention is based on the finding that a signaling message according to a network protocol may comprise payload data for an IP-less transmission of the payload data.

According to a first aspect of the invention, the objective is solved by a network entity for forwarding user payload data from a user entity to a network server. The network entity comprises a network interface configured to receive the user payload data from the user entity and a processor. The processor is configured to provide a data packet. The data packet comprises a signalling message according to a first network protocol that provides signalling for authentication, authorization, and/or accounting management. The signalling message comprises an attribute field. The processor is configured to include the received payload data into the attribute field to obtain a processed data packet. The network interface is configured to transmit the processed data packet to the network server.

The network entity can be a cellular IoT serving gateway node, C-SGN. The network entity may comprise the functionality of a serving gateway, SGW, a mobility management entity, MME, and a packet data network, PDN, gateway, PGW. The network interface may comprise a radio communication interface and/or a non-radio interface. The network interface is configured to receive the user payload data from a user entity. The user entity may comprise an IoT modem for sending the payload data, i.e. application data, in a backbone network to the network entity.

The processor of the network entity may be a computer system, for example a server or a microcontroller.

For transmitting signalling messages, for example access requests or accounting requests, the network entity uses a network protocol that provides signaling for authentication, authorization and/or accounting, AAA, management. Therefore, the network entity may use an AAA protocol sending those signalling messages to a protocol server. The first network protocol may also support signaling messages for only one or two of authentication, authorization or accounting. For example an accounting message is sent via an online charging system, OCS. The signalling message comprises an attribute field. The attribute field may be a part of a data packet of the first network protocol that is configured to transmit specific data dependent on a network status, signalling information and/or transmitting data.

By transmitting the payload data embedded into a signalling message, the network entity does not have to create a separate data packet for the payload data using an UDP/IP header. Therefore, only one interface between the customer and the mobile network operator is necessary, for example the AAA protocol interface. This may lead to a lower development effort for the customer. Moreover, fewer messages may be sent between the customer and the mobile network operator, as payload data and the signalling message containing additional information, such as an international mobile subscriber identity, IMSI, or MSISDN, authentication info or SIM status info are included into one message. Moreover, the complexity of operations in the network entity, for example the access point name, APN, i.e. in the CSGN, may be reduced because no IP to IMSI mapping is needed and no UDP/IP encapsulation and decapsulation of payload data traffic is needed.

According to an embodiment, the processor is configured to create an attribute field in the signalling message to include the received payload data into the created attribute field.

The network protocol may be configured to allow a network entity to create an attribute field. By creating an attribute field in the signalling message, the network entity provides the basis for embedding the payload data into the signalling message.

According to an embodiment, the network interface (102) is configured to transmit the processed data packet to the network server (103) according to the first network protocol.

NB-IoT devices transmit a low amount of data in one message. Using such a user equipment as user entity for transmitting payload data to the network entity, it is possible that the network entity includes this low amount of data into one message.

According to an embodiment, the first network protocol is RADIUS or DIAMETER protocol.

In this embodiment, the network interface may be configured to transmit the processed data packet according to the RADIUS protocol or DIAMETER protocol.

RADIUS or DIAMETER protocols are common AAA protocols that provide the possibility to include a status attribute field into a signalling message.

According to an embodiment, the processor is configured to create an attribute value pair as the attribute field. Herein, the attribute value pair comprises a value part, and the processor is configured to include the received payload data into the value part of the attribute value part.

The attribute value pair, AVP, contains predefined fields, such as a header, a length and/or the value part. While the length describes the length of the attribute value pair, in the value part a value for signalling information can be transmitted. According to this embodiment, the processor is configured to use this value part for including the payload data into the attribute field of the signalling message. A type of the AVP is predefined to indicate the AVP to contain payload data. The definition may be processes by the network entity or another computer system that is connected to the network entity and the network server.

According to an embodiment, the network entity is a cellular IoT serving gate node, C-SGN.

A C-SGN includes the functionality of an SGW, MME and PGW. The network entity therefore is a connecting entity between a backbone network and a core network. This network entity is possible to receive payload data from a user entity over the backbone network and to forward this payload data to an application server of a customer over the core network, for example using the Internet. In other embodiments, the network entity may be a PGW and/or MME/SGW and/or PGW.

According to a second aspect of the invention, the objective is solved by a communication system for forwarding user payload data from a user entity to a network server. The system comprises a user entity configured to send the user payload data and a network entity with a processor and a network interface. The network interface is configured to receive the user payload data from the user entity. The processor is configured to provide a data packet. The data packet comprises a signalling message according to a first network protocol that provides signalling for authentication, authorization, and/or accounting management. The signalling message comprises an attribute field. The processor is configured to include the received payload data into the attribute field to obtain a processed data packet. The network interface is configured to transmit the processed data packet to the network server.

The user entity may comprise a narrow-band Internet of Things entity. The user payload data may be payload with a small size.

In an embodiment, the user entity comprises a processor for capturing the user payload data.

The processor may be in functional connection to a sensor that is configured to capture physical values. The sensor may be a level sensor for measuring a level of a garbage bin or a fire sensor for detecting a fire.

In an embodiment, the user entity comprises a communication interface that is configured to transmit the payload data from the user entity to the network entity.

The modem may be an NB-IoT modem. The modem may comprise a SIM card. The modem may comprise an IMSI and/or MS-ISDN and/or other identification information to identify the user in a cellular network.

In an embodiment, the network server comprises a protocol server according to the first protocol and an application server for processing the payload data.

Without including the payload data into a signalling message, the separated payload data message has to be sent to an application server, for example by including an UDP/IP header. Moreover, for transmitting the signalling message, a protocol server is needed. By including a payload data into the signalling message, the system can be simplified to a combined protocol and application server on the customer side.

In an embodiment, the network interface of the network entity is configured to receive data from the network server according to the first network protocol that provides centralized authentication, authorization and accounting management and to include the data into a network signaling message, and wherein the network interface is configured to transmit the network signalling message comprising the included data to the user entity.

Control data from the customer that is generated in the application server of the customer may be transmitted in the same manner as described above from the server to the network entity, i.e. using the described forwarding of user payload from a user entity to a network server backwards. The network signaling message may be a non-access stratum, NAS, message.

According to a third aspect, the objective is solved by a method for forwarding user payload data from a user entity to a network server. The method comprises:
providing a data packet, the data packet comprising a signalling message according to a first network protocol that provides signaling for authentication, authorization and/or accounting management, the signalling message comprising an attribute field;
including the received payload data into the attribute field to obtain a process data packet; and
transmitting the process data packet to the network server.

According to a fourth aspect, the objective is solved by a computer program product with a program code to execute the above described method, while the program code is being executed on a computer system.

The inventive concept is now described, by way of example, with reference to the accompanying drawings, in which:
Fig. 1 is a schematic illustration of a system according to one embodiment;
Fig. 2 is a schematic flow diagram of a method according to one embodiment; and
Fig. 3 is another schematic flow diagram of another method according to another embodiment.

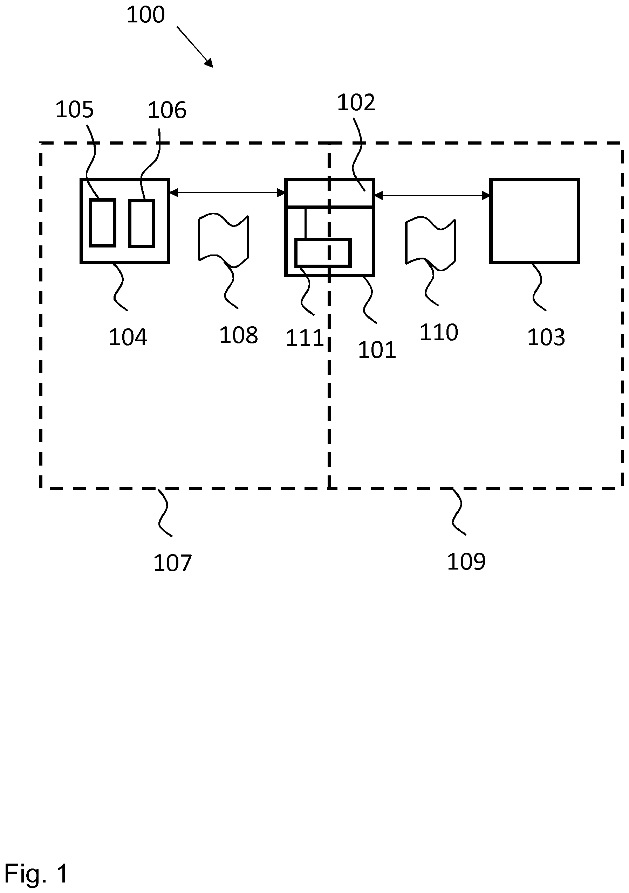

Fig. 1 shows a system 100. The system 100 comprises a network entity 101. In the described embodiment, on the network entity 101 an access point name, APN is installed. In particular, the network entity 101 is a cellular IoT serving gateway node, CSGM. The network entity 101 comprises a functionality of a mobility management entity, a PDN gateway or/and a serving gateway. The network entity is allocated on a logical layer between a first network 107 and a second network 109. In the described embodiment, the first network 107 is a radio access network, RAN and the second network 109 is a core network. In other embodiments, one or both networks 107, 109 can be named differently and/or comprise different functionality.

The network entity 101 comprises a network interface 102. The network interface 102 comprises an interface for receiving messages and an interface for sending and transmitting messages.

The system 100 comprises a network server 103. In the described example, the server 103 comprises a protocol server and an application server. The protocol is an AAA, i.e. authentication, authorization and accounting, protocol. In the described embodiment, the protocol is RADIUS. In another embodiment, the server 103 comprises another AAA protocol server, such as DIAMETER or another protocol.

The system 100 further comprises a user entity 104. The user entity 104 is a user equipment in a narrow-band Internet of Things network and comprises a sensor 105 and a modem 106.

The sensor 105 is configured to detect events and to generate values depending on the detected events. For example, the sensor is a level sensor for detecting the level of a garbage bin and is configured to generate a value that describes a full status of the garbage bin, if the level of the garbage in the garbage bin is over a predefined level. The sensor 105 forwards this value to the modem 106. In the described embodiment, the modem 106 is a narrow-band Internet of Things modem comprising an Identity information, e.g. IMSI and/or MS-ISDN.

The user entity 103 is allocated in the first network 107. The user entity 104 is configured to send a network signalling message 108 over the first network 107 from the modem 106 to the network entity 101 which receives the network signalling message 108 by the network interface 102. In another embodiment, the user entity 104 is configured to send a message according to another protocol to the network entity 101.

The network entity 101 is configured to communicate with the server 103 over the second network 109. The network entity 101 is configured to communicate with the server 103 using the RADIUS protocol that is an authentication, authorization and accounting management protocol. In another embodiment, the network entity 101 communicates with the server 103 over DIAMETER protocol or another protocol.

The network entity 101 transmits a signalling message 110 to the server 103 via the network interface 102. The signalling message 110 comprises protocol information according to the AAA protocol. For example, the signalling message 110 is an accounting request according to the RADIUS protocol.

The signalling message 110 comprises an attribute field, in particular an attribute value pair. According to the RADIUS protocol, attribute value pairs, AVP, carry signalling data in both the request and the response for the authentication, authorization, and accounting transactions. An AVP comprises a type, a length and a value part. The type defines what kind of information the AVP comprises. In particular, a new type is created that indicates that the AVP contains payload data. This type definition is performed by a processor of a computer system in preparation of using the network entity according to this embodiment. The length part defines the length of the RADIUS packet and is used to determine the end of the AVP. An attribute value pair according to the RADIUS protocol carries information about network-relevant data. For example, an accounting status or a delay time or a session ID or a session time or a location information or a management policy ID are stored in the value part. Other examples are given in the RADIUS protocol.

A processor 111 of the network entity 101 is configured to create an attribute value pair in the signalling message 110. The processor 111 configures a new type of attribute field that comprises this payload data from the user entity 104. The processor 111 of the network entity 101 includes the payload data from the user entity 104 into this attribute field. The signalling message 110 that comprises the user payload data in the generated attribute field is a processed signalling message.

By transmitting this processed signalling message 110 via the first network protocol to the server 103, an IP-less data transmission, a so called non-IP data delivery, NIDD, between the user entity 104 and the network entity 101 could be prolonged to network server 103 .

The network entity 101 is also configured to receive messages from the server 103 over the second network 109. This message, transmitted by the server 103, is also a signalling message and contains protocol information according to the AAA protocol. This signalling message that is received by the network interface 102 of the network entity 101 contains user payload data that was included by the server 103 and transmitted to the network entity 101.

The network entity 101 is configured to extract the user payload data from the received signalling message 110 that was transmitted by the server 103 to the network entity 101. The network entity 101 is further configured to create a network signalling message, in particular a NAS message, and to include the user payload data received from the server 103 into the network signalling message 108. The network entity 101 then transmits the network signalling message 108 to the user entity 104. The user entity 104 receives the transmitted network signalling message from the network entity 101. In particular, the modem 106 receives the network signalling message 108. The user payload data may include timer update information or instructions or acknowledgements for the user entity 104.

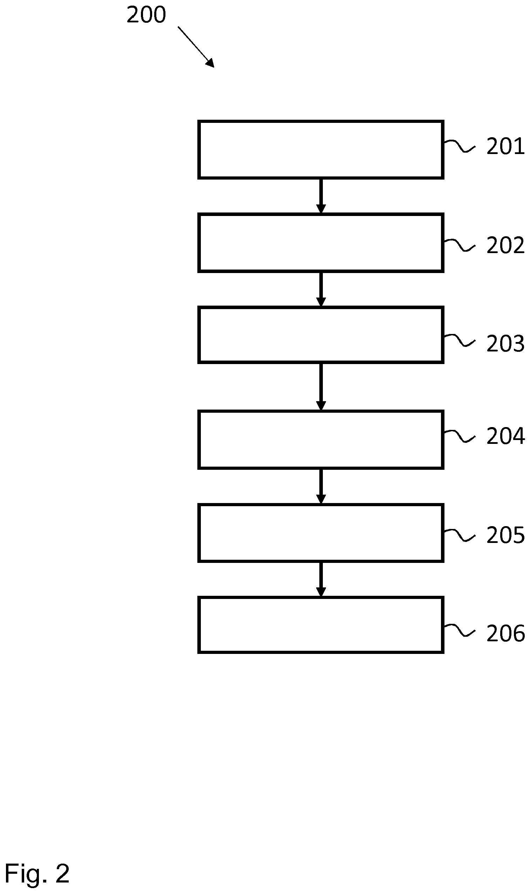

Fig. 2 shows a schematic flow diagram of a method according to one embodiment. In step 201, the network entity 101 receives a message from the user entity 104. In the described embodiment, the network entity 101 receives a network signalling message from the modem 106 of the user entity 104. The network signalling message 108 contains non-IP data and a signalling header. The network interface 102 receives the network signalling message 108.

In a step 202, the processor 111 of the network entity 101 extracts the payload data out of the network signalling message 108. For example, the processor 111 cuts off the signalling head of the network signalling message 108 and stores the payload data in a memory (not shown in Fig. 1) allocated in the network entity 101. In another embodiment, the memory is allocated separately.

In step 203, the processor 111 of the network entity 101 provides a data packet. For providing the data packet, the processor 111 creates a signalling message. In the described embodiment, the processor 111 generates the signalling message 110 according to the RADIUS protocol. The signalling message 110 comprises an accounting request for the server 103 that contains a RADIUS server and an application server. In another embodiment, the signalling message 110 is generated according to DIAMETER or another protocol.

The signalling message 110 comprises signalling data and attributes that are part of the signalling message 110. For example, the signalling message 110 comprises an AVP.

In step 204, the processor 111 of the network entity 101 creates an attribute field in the signalling message. The processor 111 creates an AVP of a new type, containing user payload data.

In step 205, the processor 111 of the network entity 101 includes the payload data into the AVP. To include the payload into the created AVP, the processor 111 reads the stored payload data from the memory and includes the payload data into the value part of the AVP. The processor 111 determines the length of the created AVP and writes the length into the length part of the AVP.

The signalling message now contains information according to the RADIUS protocol for performing AAA management. The signalling message is therefore a processed message. The signalling message 110 further comprises the payload data included into the created AVP. In another embodiment, the signalling message 110 is generated according to another protocol and an attribute field is generated according to this other protocol respectively.

In step 206, the network entity 101 transmits the signalling message 110 via the network interface 102 to the server 103. Therefore, the user payload data is forwarded from the user entity 104 to the server 103.

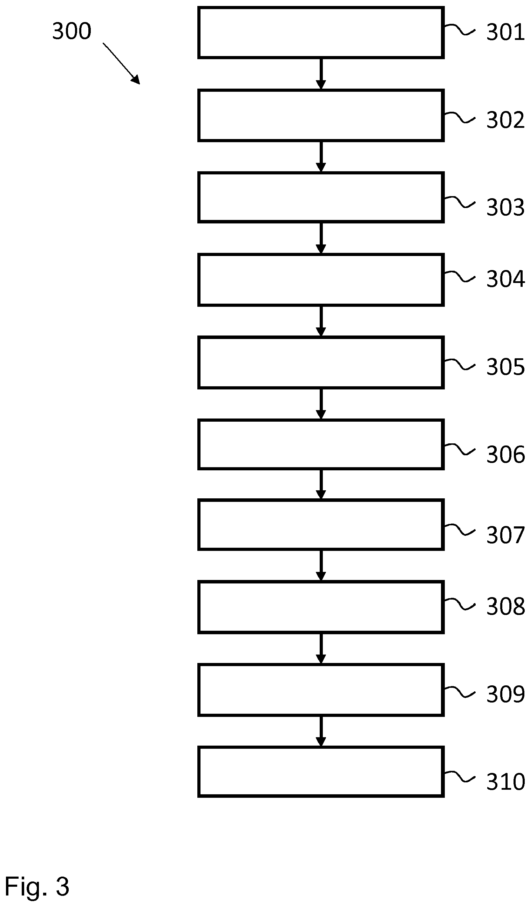

Fig. 3 shows a further flow diagram 300 according to an embodiment. The flow diagram according to Fig. 3 shows steps of a method for transmitting user payload data from the server 103 to the user entity 104 by forwarding the user payload data by the network entity 101.

In step 301, the server 103 creates user payload data. The server 103 herby acts as an application server. The payload data comprise settings for updating the user entity 104. In another embodiment, the user payload data comprise an answer signal to a received status signal or other information.

In step 302 the server 103 provides a signalling message according to a protocol according to the second network 109, comprising AAA information. The server hereby acts as a protocol server, here as a RADIUS server. In another embodiment, the server acts as a protocol server according to another protocol, for example DIAMETER.

In step 303, the server 103 creates an attribute field in the signalling message 110 that is to be transmitted to the network entity 101. In the described embodiment, the attribute field is an AVP.

In step 304, the server 103 includes the payload data into the attribute field. The signalling message 110 that contains the payload data is therefore a processed data packet that was created by the server 103.

In step 305, the server 103 sends the signalling message 110 to the network entity 101. In step 306, the network interface 102 of the network entity 101 receives the signalling message 110 containing the user payload data from the server 103.

A network entity 307 extracts the payload data from the received signalling message 110 by reading the attribute field, in this embodiment by reading the value part of the generated attribute value pair and storing the payload data into a memory of the network entity 101.

In step 308, the network entity provides a message 108 according to a second network protocol. In the described embodiment the network signalling message 108 is a non-access stratum, NAS, message.

In step 309, the network entity 101 includes the stored payload data into the network signalling message 108.

The network entity forwards the user payload data to the user entity 103, by sending the network signalling message 108 to the modem 106 of the user entity 104 in step 310.

### REFERENCE SIGNS

- 100: system
- 101: network entity
- 102: network interface
- 103: server
- 104: user entity
- 105: sensor
- 106: modem
- 107: first network
- 108: network signalling message
- 109: second network
- 110: signalling message
- 111: processor
- 200, 330: flow diagram
- 201 to 206: step
- 301 to 310: step

## Claims

1. A network entity (101) for forwarding user payload data from a user entity (104) to a network server (103), the network entity (101) comprising:
a network interface (102) configured to receive the user payload data from the user entity (104);
a processor (111) configured to
provide a data packet, the data packet comprising a signalling message (110) according to a first network protocol that provides signalling for authentication, authorization, and/or accounting management, the signalling message (110) comprising an attribute field;
include the received payload data into the attribute field to obtain a processed data packet; wherein
the network interface (102) is configured to transmit the processed data packet to the network server (103).

2. The network entity (101) according to claim 1, wherein the processor (111) is configured to create an attribute field in the signalling message (110) and to include the received payload data into the created attribute field.

3. The network entity (101) according to one of the previous claims, wherein the network interface (102) is configured to transmit the processed data packet to the network server (103) according to the first network protocol.

4. The network entity (101) according to one of the previous claims, wherein the first network protocol is RADIUS or DIAMETER protocol.

5. The network entity (101) according to claim 4, wherein the processor (111) is configured to create an attribute value pair as the attribute field and wherein the attribute value pair comprises a value part and wherein the processor (111) is configured to include the received payload data into the value part of the attribute value pair.

6. The network entity (101) according to one of the previous claims, wherein the network entity (101) is a Cellular Internet of Things Serving Gateway Node, in particular C-SGN.

7. The network entity (101) according to one of the previous claims, wherein the network interface (102) is configured to include the payload data into a network signalling message (108), in particular a non-access stratum message and wherein the network interface (102) is configured to transmit the network signalling message (108) comprising the included data to the user entity (104)

8. Communication system (100) for forwarding user payload data from a user entity (104) to a network server (103), the system (100) comprising
a user entity (104) configured to send the user payload data;
a network entity (101) with a processor (111) and a network interface (102), wherein the network interface (102) is configured to receive the user payload data from the user entity (104), and wherein the processor (111) is configured to
provide a data packet, the data packet comprising a signalling message (110) according to a first network protocol that provides signalling for authentication, authorization, and/or accounting management, the signalling message (110) comprising an attribute field;
include the received payload data into the attribute field to obtain a processed data packet; wherein
the network interface (102) is configured to transmit the processed data packet to the network server (103).

9. Communication system (100) according to claim 8, wherein the user entity (104) comprises a processor (105) for capturing the user payload data.

10. Communication system (100) according to one of claims 7 or 8, wherein the user entity (104) comprises a communication interface (106) that is configured to transmit the payload data from the user entity (104) to the network entity (101), in particular configured to transmit the payload data non-IP based.

11. Communication system (100) according to one of claims 7 to 9, wherein the network server (103) comprises a protocol server according to the first network protocol and an application server for processing the payload data.

12. Communication system (100) according to one of claims 7 to 10, wherein the network interface (102) of the network entity (101) is configured to receive data from the network server (103) according to the first network protocol that provides centralized authentication, authorization, and accounting management and to include the data into a network signalling message (108) and wherein the network interface (102) is configured to transmit the network signalling message (108) comprising the included data to the user entity (104).

13. Method forwarding user payload data from a user entity (104) to a network server (103), the method comprising:
providing a data packet, the data packet comprising a signalling message (110) according to a first network protocol that provides signalling for authentication, authorization, and/or accounting management, the signalling message (110) comprising an attribute field;
including the received payload data into the attribute field to obtain a processed data packet; and
transmitting the processed data packet to the network server (103).

14. Computer program product with program code to execute the method according to claim 12, when the program code is being executed on a computer system.
